(19) Europäisches Patentamt
European Patent Office
Office européen des brevets

(11) Numéro de publication : **0 336 828 B1**

# (12) FASCICULE DE BREVET EUROPEEN

(45) Date de publication du fascicule du brevet : **15.01.92 Bulletin 92/03**

(51) Int. Cl.$^5$ : **F17D 5/00,** G01M 3/00

(21) Numéro de dépôt : **89400909.1**

(22) Date de dépôt : **03.04.89**

(54) **Sonde de mesure utilisable en vue de l'établissement du relevé topographique d'un tube non librement accessible.**

(30) Priorité : **07.04.88 FR 8804615**

(43) Date de publication de la demande : **11.10.89 Bulletin 89/41**

(45) Mention de la délivrance du brevet : **15.01.92 Bulletin 92/03**

(84) Etats contractants désignés : **AT BE CH DE ES GB GR IT LI LU NL SE**

(56) Documents cités :
**DE-A- 2 354 117**
**DE-A- 3 511 774**
**GB-A- 2 130 721**
**US-A- 4 717 875**

(73) Titulaire : **SOCIETE D'APPLICATIONS GENERALES D'ELECTRICITE ET DE MECANIQUE SAGEM**
**6, Avenue d'Iéna**
**F-75783 Paris Cédex 16 (FR)**

(72) Inventeur : **Martin, Frédéric**
**18, avenue Carnot**
**F-78600 Maisons-Lafitte (FR)**

(74) Mandataire : **Gorree, Jean-Michel et al**
**Cabinet Plasseraud 84, rue d'Amsterdam**
**F-75009 Paris (FR)**

EP 0 336 828 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une sonde de mesure utilisable en vue de l'établissement du relevé topographique d'un tube non librement accessible, tel qu'un pipe-line enterré ou immergé, cette sonde étant destinée à être propulsée par un fluide en circulation dans le tube et étant agencée conformément au préambule de la revendication 1.

Il est souhaitable de pouvoir connaître avec précision la position exacte d'un tube enfoui (par exemple un pipe-line ou un gazoduc, enterré ou immergé) dont seules les deux extrémités sont accessibles. Cette connaissance est nécessaire par exemple pour éviter un endommagement du tube au cours de travaux effectués dans son voisinage immédiat, ou bien pour détecter un déplacement non contrôlé du tube (à la suite d'un glissement de terrain par exemple), ou bien encore pour déterminer les contraintes s'exerçant sur un tube suspendu en deux de ses points (pipe-line enjambant une faille sous-marine par exemple).

Une sonde du genre précitée est connue de par les documents US 4717875 et GB-A-2130721. Toutefois les équipements respectifs de ces sondes connues sont insuffisants pour effectuer des relevés complets, et avec toute la précision souhaitée, de la topographie du tube et notamment des points particuliers à détecter et/ou à surveiller.

L'invention a donc essentiellement pour objet de proposer une sonde de structure perfectionnée qui donne mieux satisfaction aux diverses exigences des utilisateurs, et qui en particulier procure une plus grande précision des relevés topographiques que la sonde connue précitée.

A ces fins, une sonde du genre mentionné plus haut et agencée conformément à l'invention se caractérise essentiellement en ce qu'elle comprend en outre :

— au moins un capteur odométrique extérieur au carter, coopérant avec la paroi du tube et apte à fournir un signal électrique représentatif de la distance parcourue par la sonde dans le tube ;

— des capteurs inertiels comprenant des moyens de détection accélérométrique ($A_x$, $A_y$, $A_z$) aptes à détecter les accélérations linéaires suivant les axes d'un référentiel ;

— un barillet monté coaxialement à l'intérieur du carter et apte à tourner par rapport à celui-ci autour d'un axe sensiblement coaxial à celui du carter ; et

— un coeur abrité dans le barillet et solidaire de celui-ci dans sa rotation, sur lequel sont disposés les susdits capteurs inertiels et moyens de détection gyroscopiques, le référentiel précité étant lié au barillet

La sonde est normalement introduite dans le tube à une de ses extrémités accessibles, puis propulsée dans le tube par la pression du fluide en circulation dans celui-ci, et récupérée à l'autre extrémité accessible du tube. Au cours de son parcours, on détecte et on mémorise des informations de positions, de vitesses angulaires, d'accélérations linéaires, et de déplacements curvilignes à partir desquelles, connaissant en outre avec précision les emplacements d'arrivée et de départ, il est possible de reconstituer le parcours de la sonde, et donc le tracé du tube.

Le recours à des moyens capteurs odométriques (qui par ailleurs sont connus en eux-mêmes) est d'une importance fondamentale pour procurer une détection précise du développement linéaire du tube à inspecter et pour procurer une référence linéaire à toutes les données fournies par les autres capteurs.

Le recours à des moyens de détection gyroscopiques permet, en conjonction avec les moyens de détection accélérométriques, d'obtenir une information précise et pratiquement instantanée sur les changements d'orientation de la trajectoire de la sonde, et donc sur les orientations respectives des tronçons successifs du tube, tout en localisant de façon précise les points remarquables (par exemple début et fin des courbes).

Enfin, le recours à un barillet, abritant le coeur du dispositif, qui est monté tournant autour de son propre axe longitudinal lui-même sensiblement coaxial à l'axe du tube, permet de moyenner les écarts de mesure dus notamment aux erreurs propres introduites par les capteurs ; on effectue ainsi un relevé hélicoïdal au sein du tube qui, après traitement approprié par les moyens de traitement de données, procure une information topographique linéaire plus précise que celle obtenue par une détection purement linéaire comme c'est le cas dans les appareils antérieurs.

Pour écarter les erreurs de mesure de positionnement provoquées par un glissement sans roulement des capteurs odométriques, la sonde est équipée d'au moins deux capteurs odométriques et les moyens de traitement de données sont agencés pour comparer en permanence leurs informations respectives et ne retenir que l'information ayant la valeur la plus élevée.

Avantageusement, dans un but de simplification, les moyens de guidage et les moyens d'étanchéité sont réunis ensembles sous forme d'au moins deux jupes annulaires qui entourent le carter respectivement vers l'avant et l'arrière de celui-ci et dont les bords libres annulaires coopèrent de façon étanche avec la paroi du tube.

Dans un mode de réalisation avantageux, les moyens de détection accélérométriques comprennent trois accéléromètres à un axe sensible détectant les accélérations linéaires suivant respectivement trois axes du

référentiel lié au barillet. De même, les moyens de détection gyroscopiques peuvent comprendre deux gyroscopes à deux axes sensibles détectant les vitesses angulaires suivant respectivement deux des axes du référentiel lié au barillet. Une redondance dans la position des axes sensibles des gyroscopes permet de déceler et/ou de compenser certaines erreurs de référencement.

De façon souhaitable, pour éviter une dérive thermique des composants et procurer une meilleure fiabilité, la sonde comporte en outre des moyens de thermostatage pour réguler la température interne du barillet à une valeur prédéterminée.

Toujours pour accroître la fiabilité, le coeur peut être monté dans le barillet par l'intermédiaire de moyens de suspension aptes à amortir les chocs et les vibrations.

Pour accroître l'autonomie de fonctionnement de la sonde et lui permettre d'effectuer des relevés dans des tubes de grande longueur, la sonde peut comporter en outre un second carter renfermant des moyens de fourniture d'énergie électrique, ce second carter étant attelé au premier carter et raccordé à celui-ci par des liaisons électriquement conductrices.

L'invention sera mieux comprise à la lecture de la description détaillée qui suit d'un mode de réalisation préféré, donné uniquement à titre d'exemple non limitatif ; dans cette description on se réfère aux dessins annexés sur lesquels :

— la figure 1 est une vue schématique en coupe diamétrale d'une sonde agencée conformément à l'invention ;

— la figure 2 est un schéma-bloc illustrant l'agencement fonctionnel électronique général de la sonde ; et

— la figure 3 est un schéma-bloc illustrant les moyens électroniques mis en oeuvre pour la détermination de la position instantanée de la sonde.

En se référant tout d'abord à la figure 1, la sonde, désignée dans son ensemble par la référence numérique 1, comprend un carter 2 sous forme d'un élément tubulaire allongé et étanche maintenu, par des moyens de guidage, sensiblement coaxialement à l'axe 3 du tube (dont seule la surface interne est schématisée par un trait mixte 4) dans lequel la sonde est appelée à se déplacer.

Dans l'exemple représenté, les moyens de guidage sont agencés sous forme d'au moins deux jupes annulaires 5, disposées respectivement approximativement vers l'avant et vers l'arrière du carter 2 (le sens de déplacement de la sonde est symbolisé par la flèche 6), qui entourent le carter et s'étendent entre le carter 2 et la surface 4 du tube.

Cet agencement offre en outre l'avantage que ces mêmes jupes 5 peuvent également jouer le rôle de moyens d'étanchéité en étant munies chacune d'un bord périphérique 7 formant joint d'étanchéité, coopérant de façon étanche avec la surface 4 du tube.

Ces jupes 5 ainsi conçues isolent l'une de l'autre de façon étanche les zones du tube situées respectivement à l'arrière et à l'avant du carter 2 et la sonde peut ainsi être propulsée à l'intérieur du tube simplement par un fluide en circulation dans le tube.

Toujours a l'extérieur du carter 2 se trouvent au moins deux capteurs odométriques 8 comportant chacun un bras 9 articulé en rotation sur le carter 2 et supportant à son extrémité libre une roue folle 10 maintenue appliquée élastiquement contre la surface 4 du tube en vue de son roulement sans glissement sur cette surface. Les roues 10 sont agencées (avec des moyens connus en soi et non visibles sur la fig. 1) pour délivrer chacune une impulsion électrique par tour.

A l'intérieur du carter 2 est disposé un barillet 11 monté coaxialement au carter et apte à tourner autour d'un axe longitudinal parallèle (et coaxial autant que possible) à l'axe 3 du tube. A cet effet, le barillet 11 est muni d'arbres d'extrémité 12 supportés dans des paliers respectifs 13 solidaires du carter 2. Un moteur électrique 14 permet de communiquer au barillet une vitesse de rotation de l'ordre de 1 tour par minute.

Un ensemble de contacts électriques (non représentés) permet de faire transiter les informations odométriques jusqu' au barillet et d'alimenter le barillet en énergie électrique à partir d'une source d'énergie électrique (batterie) non représentée. Cette source peut être prévue à l'intérieur du carter ; mais pour des parcours relativement longs (pouvant par exemple durer plusieurs heures), cette source électrique, devenue très lourde et volumineuse, peut être reportée dans un second véhicule attelé mécaniquement et électriquement au premier précité (liaison 15 sur la fig. 1).

Le barillet 11 inclut un coeur 16 regroupant plusieurs capteurs inertiels, savoir :

— trois accéléromètres $A_x$, $A_y$ et $A_z$ à un axe sensible détectant les accélérations linéaires suivant trois axes (schématisés respectivement par trois flèches) d'un référentiel lié au barillet ;

— et deux gyroscopes $G_1$ et $G_2$ à deux axes sensibles détectant les vitesses angulaires suivant les axes du référentiel précité (respectivement axes x et y pour le gyroscope $G_1$ et axes y et z pour le gyroscope $G_2$), le recours à ce type de capteurs imposant une redondance dans la disposition des axes sensibles.

Le coeur est suspendu pour préserver les capteurs accélérométriques et gyrométriques d'un endommagement dû à des chocs, et il est thermostaté pour éviter toute dérive thermique des capteurs et leur conserver

leur précision, source de la fiabilité des mesures effectuées et de la précision subséquente du relevé topographique qui en est déduit.

Le barillet 11 contient également le matériel électronique destiné à assurer l'alimentation des capteurs, la gestion de la régulation thermique du coeur 16, l'asservissement des capteurs, l'acquisition des mesures gyrométriques accélérométriques et odométriques par un calculateur, le traitement de ces informations et leur stockage dans une mémoire.

Enfin, un ensemble de connecteurs permet, après un parcours de la sonde dans un tube, d'accéder aux informations mémorisées pour leur traitement et la reconstitution du parcours, permettant d'en déduire la topographie précise du tube entre les points de départ et d'arrivée de la sonde.

On va maintenant expliquer le mode de fonctionnement de la sonde qui vient d'être décrite, en se référant aux figures 2 et 3.

On rappellera tout d'abord que les capteurs inertiels sont constitués d'un élément sensible (pendule pour l'accéléromètre, volant pour le gyroscope) qui doit être asservi en position. La mesure des efforts ou des couples de rappel est l'image de la grandeur physique à mesurer (accélération linéaire ou vitesse angulaire respectivement).

On se reportera tout d'abord à la fig. 2 montrant schématiquement l'architecture fonctionnelle életronique de la sonde.

Un multiplexeur MUX fait l'acquisition en séquence (par exemple à 2000 Hz environ) des grandeurs suivantes :

— angles de battement $DX_1$, $DY_1$ et $DY_2$, $DZ_2$ des éléments sensibles des gyroscopes respectivement $G_1$ et $G_2$ ;

— angles de battement $DA_x$, $DA_y$, $DA_z$ des pendules des accéléromètres respectivement $A_x$, $A_y$, $A_z$ ;

— température T du coeur.

Ces informations analogiques sont numérisées à l'aide d'un convertisseur analogique-numérique CAN (par exemple sur 12 digits), et transitent sur un bus série 18.

Une Unité de Traitement (UT) (micropresseur rapide et circuits associés) élabore des commandes numériques qui sont transmises, par un bus 19, à des convertisseurs numérique/analogique de précision (CNAP) qui les traduisent en courants analogiques respectifs, lesquels sont appliqués aux moteurs-couples MC des capteurs correspondants. Si la conversion est précise, chaque ordre envoyé par le microprocesseur de l'Unité de Traitement est le reflet du courant analogique injecté dans le moteur-couple du capteur correspondant, et donc du couple (ou de la force) s'exerçant sur l'élément sensible, ces grandeurs équilibrant les couples (ou force) exercées par les vitesses angulaires (ou les accélérations linéaires) auxquelles la sonde est soumise.

De plus, une commande de chauffage est élaborée par l'Unité de Traitement UT et appliquée via un convertisseur numérique-analogique CNA à un circuit de chauffage 20.

Enfin, les informations élaborées par l'Unité de Traitement sont stockées à intervalles réguliers dans une mémoire MEM non volatile (par exemple de 512 k octets).

L'élaboration des coordonnées du parcours s'effectue de la manière suivante (on se réfère simultanément à la fig. 3 qui schématise la constitution de l'électronique élaborée pour réaliser ce fonctionnement).

Tout d'abord, on définit quatre référentiels comme suit :

a) $R_0$ ($i_0$, $j_0$, $k_0$) est un premier référentiel où :

$i_0$ est colinéaire à la gravité locale,

$j_0$ est orienté vers l'est ;

b) $R_1$ ($i_1$, $j_1$, $k_1$) est un deuxième référentiel déduit de $R_0$ par rotation de l'angle de cap autour de $i_0 = i_1$ ; le plan ($i_1$, $k_1$) est donc vertical et tangent au tube ;

c) $R_2$ ($i_2$, $j_2$, $k_2$) est un troisième référentiel déduit de $R_1$ par rotation de l'angle d'inclinaison $\theta$ autour de $j_1 = j_2$ ; le vecteur $k_2$ est donc tangent à l'axe du tube ;

d) $R_3$ ($i_3$, $j_3$, $k_3$) est un quatrième référentiel déduit de $R_2$ par rotation de l'angle de vrillage autour de $k_2 = k_3$ ; le référentiel $R_3$ est donc lié au coeur inertiel.

On notera qu'à l'instant t = 0 les 4 référentiels coïncident.

L'élaboration des coordonnées du parcours de la sonde à l'intérieur du tube s'effectue comme suit.

Les angles $\varphi$, $\theta$, $\Psi$ constituent les trois angles d'Euler permettant de passer des référentiels $R_0$ à $R_3$ ; on leur associe le quaternion Q(t) ($q_0$, $q_1$, $q_2$, $q_3$) dont les composantes sont :

$$(1)\left\{\begin{aligned} q_0 &= \cos\frac{\varphi}{2}\cos\frac{\theta}{2}\cos\frac{\psi}{2}+\sin\frac{\varphi}{2}\sin\frac{\theta}{2}\sin\frac{\psi}{2}\\ q_1 &= \cos\frac{\varphi}{2}\cos\frac{\theta}{2}\sin\frac{\psi}{2}-\sin\frac{\varphi}{2}\sin\frac{\theta}{2}\cos\frac{\psi}{2}\\ q_2 &= \cos\frac{\varphi}{2}\sin\frac{\theta}{2}\cos\frac{\psi}{2}+\sin\frac{\varphi}{2}\cos\frac{\theta}{2}\sin\frac{\psi}{2}\\ q_3 &= \sin\frac{\varphi}{2}\cos\frac{\theta}{2}\cos\frac{\psi}{2}-\cos\frac{\varphi}{2}\sin\frac{\theta}{2}\sin\frac{\psi}{2} \end{aligned}\right.$$

Cette grandeur définit, en d'autres termes, le passage du référentiel mobile $R_3$ au référentiel fixe $R_0$ et elle se prête bien aux méthodes de calculs numériques.

Lorsqu' une vitesse de rotation instantanée $\Omega$ est appliquée à la sonde, le quaternion Q(t) évolue suivant l'équation différentielle suivante :

$$(2) \qquad \frac{dQ}{dt} = \frac{1}{2} \cdot Q\Omega$$

où $\Omega$ est le quaternion associé à $\overline{\Omega}$.

Cette équation a pour solution :

$$Q(t) = Q_0\, e^{\int_0^t \frac{\Omega}{2} dt} \qquad \text{avec } \|Q(t)\| = 1$$

Elle est normalement résolue par des méthodes utilisant des développements limités (Méthodes d'EDWARDS, de WILCOX ou de TAYLOR) (bloc 21 de la fig. 3).

Q(t) étant ainsi connu, on calcule la matrice de passage B (l, c) de $R_3$ à $R_0$ (bloc 22) : (formule (3))

$$B(l,c)\begin{vmatrix} q_0^2+q_1^2-q_2^2-q_3^2 & 2(q_1 q_2-q_0 q_3) & 2(q_1 q_3 + q_0 q_2) \\ 2(q_1 q_2+q_0 q_3) & q_0^2+q_2^2-q_3^2-q_1^2 & 2(q_3 q_2 - q_0 q_1) \\ 2(q_1 q_3-q_0 q_2) & 2(q_2 q_3+q_0 q_1) & q_0^2+q_3^2-q_1^2-q_2^2 \end{vmatrix}$$

qui constituent la matrice inverse de la relation (1).

Ces calculs sont conduits à une fréquence de par exemple 100 Hz environ.

En réalité le quaternion Q(t) ainsi calculé par la relation (2) à l'aide des seules vitesses angulaires est affecté d'erreurs dues principalement aux gyroscopes utilisés ; ceux-ci fournissent en effet une mesure de vitesses angulaire (appelée "dérive") même s'ils ne sont pas sollicités. De ce fait, le quaternion Q(t) "dérive" et les trois angles d'Euler calculés par la relation (3) évolueraient dans le temps au rythme de la dérive des gyroscopes.

Cette erreur est en partie annulée en utilisant les informations accélérométriques. On "recale" périodiquement le quaternion Q(t) (à une cadence de 10 Hz par exemple) en comparant (comparateur 23), dans le plan horizontal, les vitesses odométriques $\Delta V$ (après dérivation par rapport au temps, en 24, de la distance odométrique et projection dans le référentiel fixe $R_o$ en 25) et les vitesses $\Delta V_o$ déduites des informations accélérométriques (après projection de celles-ci dans le référentiel fixe $R_o$ en 26). En cas d'écart, le quaternion Q(t) est remis à jour.

On notera que après projection dans le référentiel $R_3$ (bloc 27), la vitesse de rotation terrestre $\Omega_T$ est également soustraite des vitesses angulaires détectées (comparateur 28).

La position de la sonde (bloc 29) à l'instant t + $\Delta$t est définie dans le référentiel fixe $R_0$ par ses trois coordonnées :

$$\begin{cases} x_0(t+\Delta t) = x_{0t} + B(1,1)\ \Delta z_3 \\ y_0(t+\Delta t) = y_{0t} + B(2,1)\ \Delta z_3 \\ z_0(t+\Delta t) = z_{0t} + B(3,1)\ \Delta z_3 \end{cases}$$

où B (l, c) $\Delta z_3$ est la projection dans $R_0$ (en 25) de l'incrément odométrique.

Ces informations sont mémorisées à une cadence voisine de 2 Hz.

Le dépouillement des données s'effectue comme suit.

La sonde parcourt le tube d'un point de départ A vers un point d'arrivée B, les coordonnées de ces deux points A et B étant connues.

Tout au long du parcours, la position M(t) d'un point courant va pouvoir être estimée et cette position restituée $[x_M(t), y_M(t), z_M(t)]$. Au point B on va constater un vecteur d'erreur :

$$\overrightarrow{B\hat{B}} \begin{cases} x_B - x_{\hat{B}} \\ y_B - y_{\hat{B}} \\ z_B - z_{\hat{B}} \end{cases}$$

dont l'analyse a posteriori permet de réduire de façon sensible l'erreur de position.

En définitive, on notera que les erreurs de "dérive" du gyroscope de cap, sont éliminées en raison de la rotation continue du barillet dans la sonde.

Quant aux erreurs odométriques qui contractent ou étirent toutes les longueurs, elles peuvent être diminuées, voire annulées, en ayant recours (comme indiqué en référence à la fig. 1) à plusieurs capteurs odométriques (par exemple deux ou trois) dont les informations respectives sont comparées en permanence et dont seule l'information de valeur la plus élevée (supposée correspondre à un roulement sans glissement) est retenue et utilisée.

## Revendications

1. Sonde de mesure (1) utilisable en vue de l'établissement du relevé topographique d'un tube non librement accessible, tel qu'un pipe-line enterré ou immergé, cette sonde étant destinée à être propulsée par un fluide en circulation dans le tube et comportant :

— au moins un carter tubulaire (2),

— des moyens de guidage (5) solidaires extérieurement du carter (2) et aptes à maintenir le carter sensiblement coaxial au tube ;

— des moyens d'étanchéité (7) interposés entre le carter et le tube pour isoler de façon étanche les parties du tube situées en amont et en aval de la sonde, de manière telle que la sonde puisse être propulsée dans le tube par le fluide en circulation ;

— des moyens de détection gyroscopique ($G_1$, $G_2$) aptes à détecter les vitesses angulaires suivant les axes du susdit référentiel ;

— et des moyens de traitement de données (17) aptes à recueillir les données fournies par les capteurs, et à traiter et mémoriser les informations obtenues,

caractérisée en ce qu'elle comprend en outre :

— au moins un capteur odométrique (10) extérieur au carter, coopérant avec la paroi (4) du tube et apte à fournir un signal électrique représentatif de la distance parcourue par la sonde dans le tube ;

— des capteurs inertiels comprenant des moyens de détection accélérométrique ($A_x$, $A_y$, $A_z$) aptes à détecter les accélérations linéaires suivant les axes d'un référentiel,

— un barillet (11) monté coaxialement à l'intérieur du carter (2) et apte à tourner par rapport à celui-ci autour d'un axe sensiblement coaxial à celui du carter ; et

— un coeur (16) abrité dans le barillet (11) et solidaire de celui-ci dans sa rotation, sur lequel sont disposés les susdits capteurs inertiels et moyens de détection gyroscopiques, le référentiel précité étant lié au barillet.

2. Sonde selon la revendication 1, caractérisée en ce que les moyens de guidage et les moyens d'étanchéité sont réunis ensemble sous forme d'au moins deux jupes annulaires (5) qui entourent le carter respectivement vers l'avant et l'arrière de celui-ci et dont les bords libres annulaires (7) coopèrent de façon étanche avec la paroi (4) du tube.

3. Sonde selon la revendication 1 ou 2, caractérisée en ce qu'elle comporte au moins deux capteurs odométriques (10) et en ce que les moyens de traitement de données sont agencés pour comparer en permanence les informations fournies par ces deux capteurs odométriques et pour ne retenir que l'information ayant la valeur la plus élevée.

4. Sonde selon l'une quelconque des revendications 1 à 3, caractérisée en ce que les moyens de détection gyroscopiques comprennent deux gyroscopes ($G_1$, $G_2$) à deux axes sensibles détectant les vitesses angulaires suivant respectivement deux des axes du référentiel lié au barillet (11).

5. Sonde selon l'une quelconque des revendications 1 à 4, caractérisée en ce qu'elle comporte en outre des moyens de thermostatage pour réguler la température interne du barillet à une valeur prédéterminée.

6. Sonde selon l'une quelconque des revendications 1 à 5, caractérisée en ce que le coeur (16) est monté dans le barillet par l'intermédiaire de moyens de suspension aptes à amortir les chocs et les vibrations.

7. Sonde selon l'une quelconque des revendications 1 à 6, caractérisée en ce qu'elle comporte en outre un second carter renfermant des moyens de fourniture d'énergie électrique, ce second carter étant attelé (en 15) au premier carter et raccordé à celui-ci par des liaisons électriquement conductrices.

## Claims

1. A measuring probe (1) of use for plotting the topography of a tube not freely accessible, such as a buried or submerged pipeline, said probe being adapted to be propelled by a fluid flowing in the tube and comprising:

— at least one tubular casing (2),

— guide means (5) externally connected to the casing (2) and adapted to hold the casing substantially coaxial with the tube ;

— sealing means (7) interposed between the casing and the tube for sealingly isolating the parts of the tube situated upstream and downstream of the probe in such manner that the probe can be propelled in the tube by the flowing fluid ;

— gyroscopic detection means ($G_1$, $G_2$) adapted to detect the angular velocities along the axes of the said reference system ;

— and data processing means (17) adapted to collect the data delivered by the sensors and process and store the data obtained,

characterised in that it also comprises :

— at least one odometer sensor (10) outside the casing and co-operating with the wall (4) of the tube and adapted to deliver an electrical signal representing the distance covered by the probe in the tube ;

— inertia sensors comprising accelerometer means ($A_x$, $A_y$, $A_z$) adapted to detect the linear accelerations along the axes of a reference system,

— a barrel (11) mounted coaxially inside the casing (2) and adapted to turn with respect to the latter about an axis substantially coaxial with that of the casing ; and

— a core (16) housed in the barrel (11) and connected thereto in respect of its rotation, the said inertia sensors and gyroscopic detection means being disposed on said core, the said reference system being connected to the barrel.

2. A probe according to claim 1, characterised in that the guide means and sealing means are interconnected in the form of at least two annular skirts (5) surrounding the casing respectively forwardly and rearwardly thereof, the free annular edges (7) of said skirts co-operating sealingly with the wall (4) of the tube.

3. A probe according to claim 1 or 2, characterised in that it comprises at least two odometer sensors (10) and in that the data processing means are adapted to permanently compare the data delivered by said two odometer sensors and retain only the data having the highest value.

4. A probe according to any one of claims 1 to 3, characterised in that the gyroscopic detection means com-

prise two gyroscopes ($G_1$, $G_2$) having two sensitive axes detecting the angular velocities respectively along two of the axes of the reference system connected to the barrel (11).

5. A probe according to any one of claims 1 to 4, characterised in that it also comprises thermostatic means for regulating the internal temperature of the barrel to a predetermined value.

6. A probe according to any one of claims 1 to 5, characterised in that the core (16) is mounted in the barrel by suspension means adapted to damp impacts and vibrations.

7. A probe according to any one of claims 1 to 6, characterised in that it also comprises a second casing containing electrical power supply means, said second casing being attached (at 15) to the first casing and connected thereto by electrically conductive connections.

## Patentansprüche

1. Molch zum Messen der topographischen Anordnung einer nicht frei zugänglichen Rohrleitung, wie einer vergrabenen oder versenkten Pipeline, wobei der Molch durch ein in der Rohrleitung fließendes Medium antreibbar ist und

— wenigstens ein rohrförmiges Gehäuse (2),

— Führungsmittel (5), die am Gehäuse (2) außen angebracht sind und geeignet sind, das Gehäuse im wesentlichen koaxial zur Rohrleitung zu halten,

— Abdichtungsmittel (7), die zwischen dem Gehäuse und der Rohrleitung zum dichten Trennen der vor und nach dem Molch angeordneten Rohrleitungsteile derart angeordnet sind, daß der Molch in der Rohrleitung durch das in ihr fließende Medium antreibbar ist,

— gyroskopische Erfassungsmittel ($G_1$, $G_2$), die zum Erfassen der Winkelgeschwindigkeiten entlang der Achsen des vorgenannten Bezugselements geeignet sind,

— und Datenverarbeitungsmittel (17), die zum Sammeln der von den Sensoren gelieferten Daten und zum Verarbeiten und Speichern der erhaltenen Informationen geeignet sind, aufweist, **dadurch gekennzeichnet**, daß er außerdem :

— wenigstens einen außerhalb des Gehäuses angeordneten Wegmessungssensor (10), der mit der Wandung (4) der Rohrleitung zusammenwirkt und geeignet ist, ein den vom Molch in der Rohrleitung zurückgelegten Weg darstellendes Signal abzugeben,

— Trägheitssensoren, die Beschleunigungserfassungsmittel ($A_x$, $A_y$, $A_z$) aufweisen, die geeignet sind, die linearen Beschleunigungen entlang der Achsen eines Bezugselementes zu erfassen,

— einen koaxial im Inneren des Gehäuses (2) angebrachten und zum Drehen gegenüber diesem um eine im wesentlichen zur Achse des Gehäuses koaxiale Achse geeigneten Zylinder (11) und

— einen im Zylinder (11) geschützten und drehungsmäßig mit diesem fest verbundenen Kern (16), auf dem die obengenannten Trägheitssensoren und gyroskopischen Erfassungsmittel angeordnet sind, wobei das sogenannte Bezugselement mit dem Zylinder verbunden ist, aufweist.

2. Molch nach Anspruch 1, **dadurch gekennzeichnet**, daß die Führungsmittel und die Abdichtungsmittel in Form wenigstens zweier ringförmiger Schürzen (5) vereinigt sind, die das Gehäuse jeweils im vorderen Teil bzw. im hinteren Teil umgeben, und deren freie ringförmige Kanten (7) abdichtend mit der Wandung (4) der Rohrleitung zusammenwirken.

3. Molch nach Anspruch 1 oder 2, **dadurch gekennzeichnet**, daß er wenigstens zwei Wegmessungssensoren (10) aufweist und daß die Datenverarbeitungsmittel zum ständigen Vergleichen der von den beiden Wegmessungssensoren gelieferten Informationen und zum Speichern nur derjenigen Information, die den höheren Wert aufweist, ausgelegt sind.

4. Molch nach einem der Ansprüche 1 bis 3, **dadurch gekennzeichnet**, daß die gyroskopischen Erfassungsmittel zwei Gyroskope ($G_1$, $G_2$) mit zwei Erfassungsachsen, die die Winkelgeschwindigkeiten entlang jeweils zweier der Achsen des mit dem Zylinder (11) verbundenen Bezugselements erfassen, aufweisen.

5. Molch nach einem der Ansprüche 1 bis 4, **dadurch gekennzeichnet**, daß er außerdem Thermostatmittel zum Regeln der inneren Temperatur des Zylinders auf einem vorgegebenen Wert aufweist.

6. Molch nach einem der Ansprüche 1 bis 5, **dadurch gekennzeichnet**, daß der Kern (16) im Zylinder mittels zum Dämpfen der Stöße und der Schwingungen geeigneter Aufhängungsmittel angebracht ist.

7. Molch nach einem der Ansprüche 1 bis 6, **dadurch gekennzeichnet**, daß er außerdem ein zweites Gehäuse aufweist, das Mittel zur Versorgung mit elektrischer Energie enthält, wobei das zweite Gehäuse (bei 15) an das erste Gehäuse angekuppelt und mit diesem mittels elektisch leitender Verbindungen verbunden ist.

FIG.1.

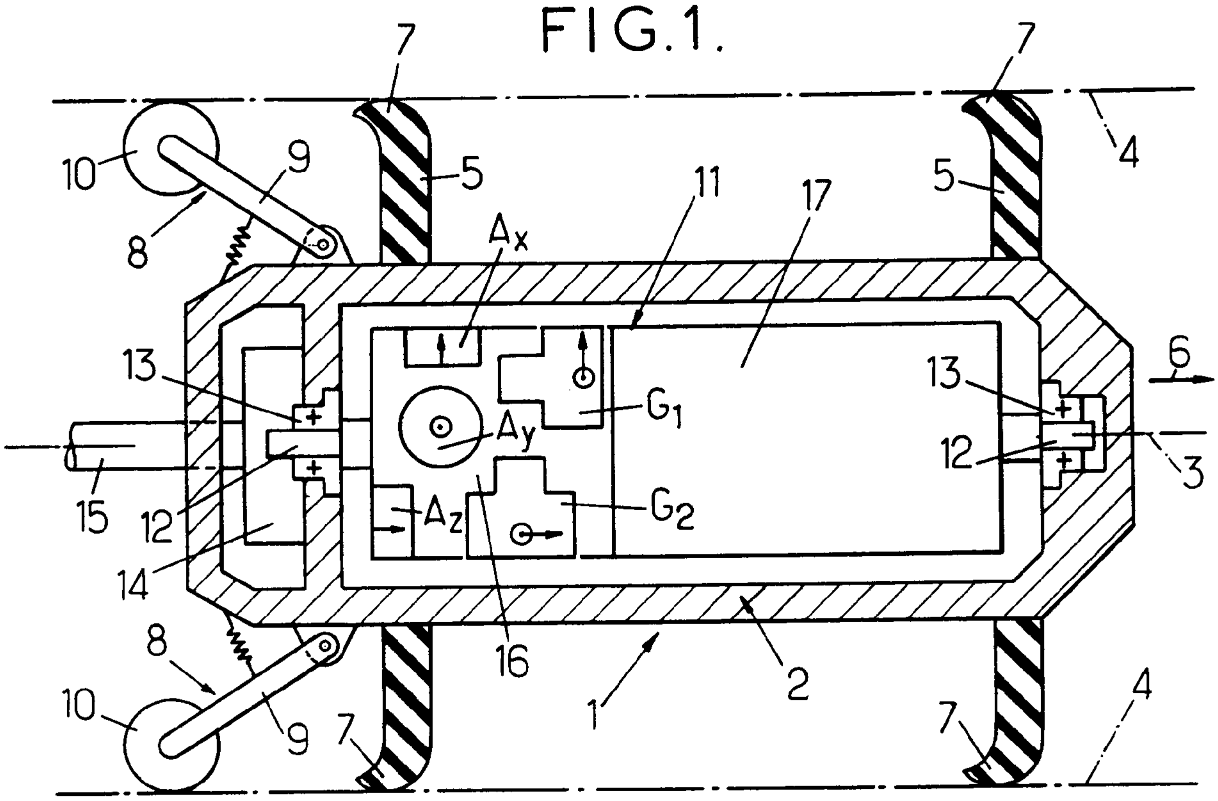
7
7
4
10
9
5
11
17
5
8
Ax
13
G1
13
6
Ay
12
15
12
Az
G2
3
14
16
2
8
1
10
9
7
7
4

FIG.2.

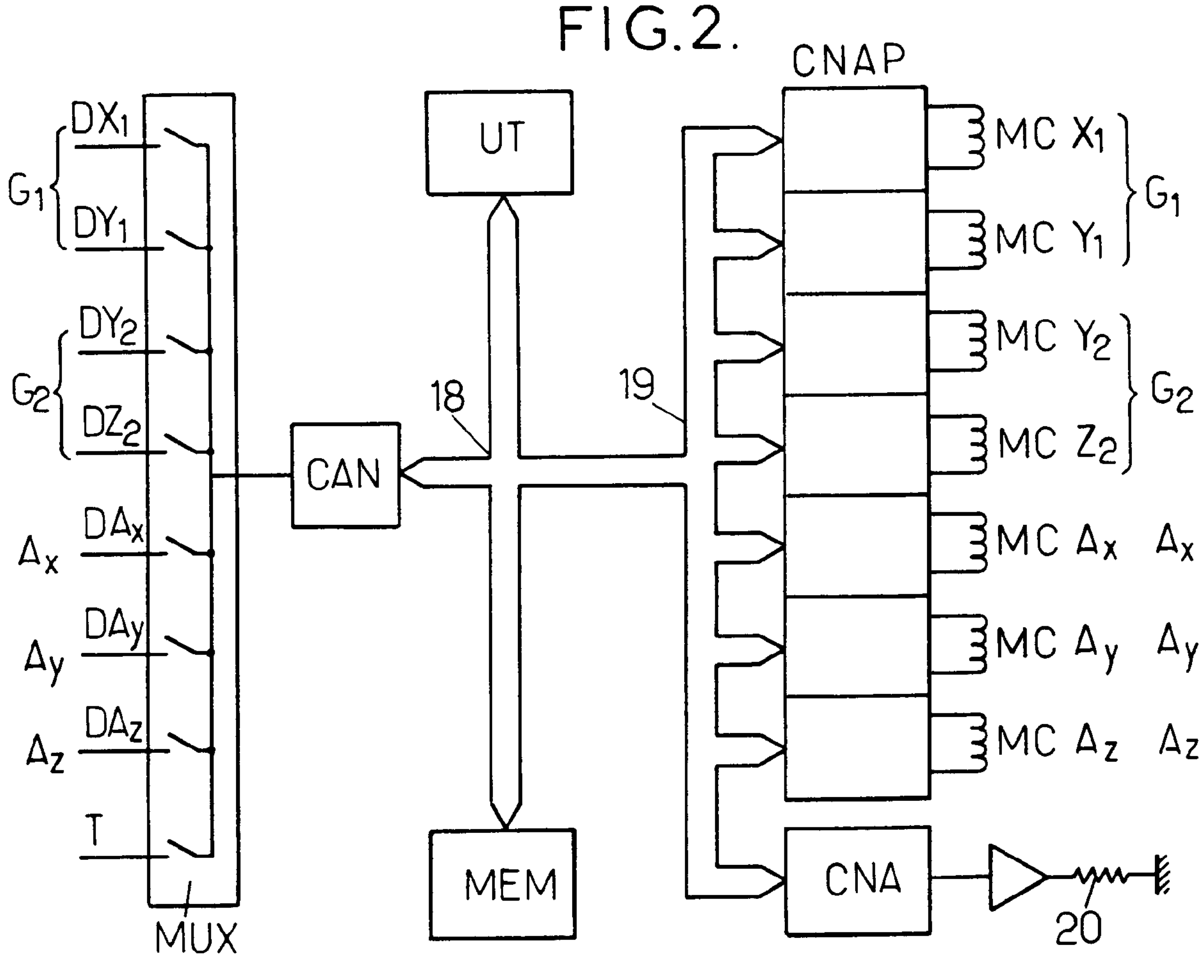
CNAP
DX1
G1
DY1
UT
MC X1
G1
MC Y1
DY2
G2
DZ2
18
19
MC Y2
G2
MC Z2
CAN
Ax
DAx
MC Ax
Ax
Ay
DAy
MC Ay
Ay
Az
DAz
MC Az
Az
T
MEM
CNA
20
MUX

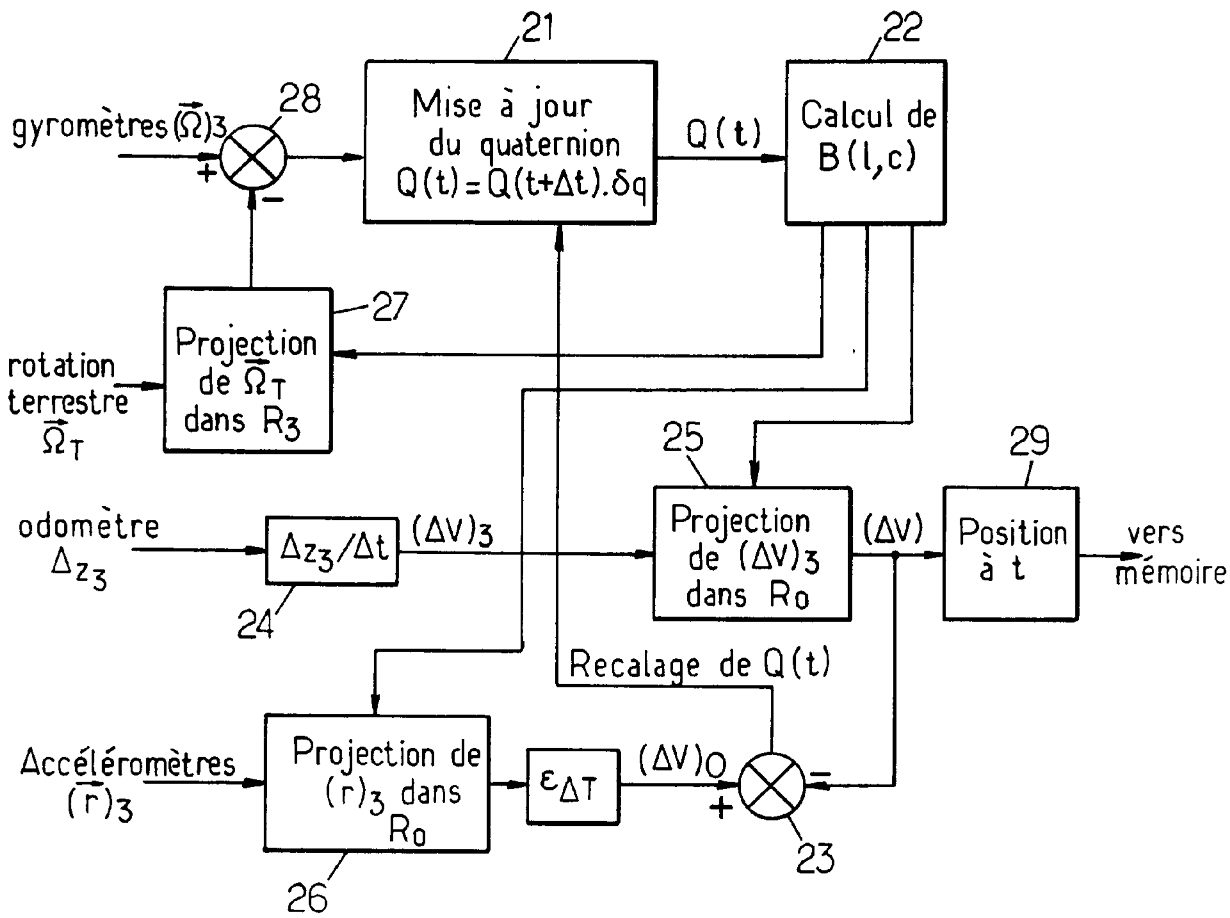

21
Mise à jour du quaternion Q(t)=Q(t+Δt).δq
22
Calcul de B(l,c)
Q(t)
gyromètres $(\vec{\Omega})_3$
28
+
−
27
Projection de $\vec{\Omega}_T$ dans $R_3$
rotation terrestre $\vec{\Omega}_T$
25
29
odomètre $\Delta_{z_3}$
$\Delta z_3/\Delta t$
$(\Delta V)_3$
24
Projection de $(\Delta V)_3$ dans $R_0$
(ΔV)
Position à t
vers mémoire
Recalage de Q(t)
Accéléromètres $(\vec{r})_3$
Projection de $(r)_3$ dans $R_0$
$\varepsilon_{\Delta T}$
$(\Delta V)_0$
+
−
23
26


FIG.3.